# EUROPEAN PATENT APPLICATION

(11) **EP 4 737 614 A1**
(43) Date of publication of application: **06.05.2026**
(21) Application number: 24852258.3
(22) Date of filing: 05.08.2024
(51) Int. Cl.: C25B 11/053, C25B 11/061, C25B 11/077, C25B 11/031, C25B 9/23, C25B 1/04, C23C 18/12

(54) **ELECTRODE AND METHOD FOR MANUFACTURING ELECTRODE**

(30) Priority: 08.08.2023 KR 20230103597
(71) Applicant: Hanwha Solutions Corporation, Jung-gu Seoul 04541 (KR)
(72) Inventor: CHAE, Gyu Sik, Daejeon 34128 (KR); KIM, Gil Ho, Daejeon 34128 (KR); CHO, Yong-Hun, Samcheok-si, Gangwon-do 25913 (KR); CHOI, Hyuck Jae, Samcheok-si, Gangwon-do 25913 (KR)
(74) Representative: Berggren Oy
(86) International application number: PCT/KR2024/011523
(87) International publication number: WO 2025/033904

(57) **Abstract**

The present disclosure relates to an electrode and a method for preparing the same. According to the present disclosure, an electrode for anion exchange membrane water electrolysis that can achieve improved electrochemical performance and also has excellent durability can be provided.

## Description

### [TECHNICAL FIELD]

### CROSS-REFERENCE TO RELATED APPLICATION(S)

This application claims the benefit of Korean Patent Application No. 10-2023-0103597 filed on August 8, 2023 with the Korean Intellectual Property Office, the disclosure of which is incorporated herein by reference in its entirety.

The present disclosure relates to an electrode and a method for preparing the electrode.

### [BACKGROUND]

Due to the problems of depletion of fossil fuels and environmental pollution, the importance of environmentally friendly hydrogen production technologies has emerged.

Accordingly, water electrolysis technologies are being actively studied, and representative low-temperature water electrolysis technologies may include proton exchange membrane water electrolysis(PEMWE), alkaline water electrolysis(AWE), anion exchange membrane water electrolysis(AEMWE), and the like.

Alkaline water electrolysis has the advantage that relatively inexpensive non-platinum metals can be used. However, there is a problem that it requires highly corrosion-resistant electrode materials, requires a large space, and has low current per electrode area, which leads to the reduction of efficiency.

Proton exchange membrane water electrolysis allows for a compact system design and has a high energy density, but has the disadvantage that platinum-based metals must be essentially used for the electrodes, which increases the cost of hydrogen production.

To overcome the drawbacks of the conventional technologies, anion exchange membrane water electrolysis(AEMWE) has been proposed.

In the case of the anion exchange membrane electrolysis, there are advantages in that it can use non-platinum metals as electrode materials due to the alkaline environment, and allows for a compact system design, which can provide a satisfactory energy density.

However, the anion exchange membrane water electrolysis has not yet been fully studied, and information on the standard exchange membrane or electrode materials is insufficient.

Therefore, in order to develop environmentally friendly hydrogen production technologies. active technological development and research on anion exchange membrane electrolysis are required.

### [DETAILED DESCRIPTION OF THE INVENTION]

### [Technical Problem]

It is an object of the present disclosure to provide an electrode for anion exchange membrane water electrolysis that can achieve improved electrochemical performance and also has excellent durability.

It is another object of the present disclosure to provide a method for preparing the electrode.

### [Technical Solution]

According to one aspect of the present disclosure, there is provided an electrode comprising: a metal substrate containing nickel; a first sol-gel coating layer formed on at least one surface of the metal substrate; and a second sol-gel coating layer formed on the first sol-gel layer, wherein the first sol-gel coating layer and the second sol-gel coating layer each independently comprise nickel and iron.

According to one embodiment, the metal substrate may comprise a porous metal foam.

According to one embodiment, the first sol-gel coating layer and the second sol-gel coating layer may each independently comprise nickel hydroxide and iron hydroxide.

According to one embodiment, the first sol-gel coating layer and the second sol-gel coating layer may each independently exist in a state in which nickel hydroxide and iron hydroxide form a three-dimensional gel network structure.

According to one embodiment, the first sol-gel coating layer and the second sol-gel coating layer may each independently comprise about 10 to about 25 moles, or about 10 moles or more, or about 15 moles or more, or about 16 moles or more, and about 25 moles or less, or about 20 moles or less, or about 18 moles or less of iron, relative to 100 moles of the nickel.

According to one embodiment, the first sol-gel coating layer may have a thickness of about 100 to about 250 nm, or about 100 nm or more, or about 150 nm or more, and about 250 nm or less, or about 200 nm or less.

According to one embodiment, the second sol-gel coating layer may have a thickness of about 500 to about 2000 nm, or about 500 nm or more, or about 800 nm or more, and about 2000 nm or less, or about 1000nm or less.

According to one embodiment, the thickness of the first sol-gel coating layer: the thickness of the second sol-gel coating layer may be about 1:2 to about 1:10, or 1:5 to about 1:7, or about 1:5 to about 1:6.67.

According to one embodiment, the electrode may be used for anion exchange membrane water electrolysis.

On the other hand, according to another aspect of the present disclosure, there is provided a method for preparing an electrode, comprising the steps of: preparing a first precursor solution(sol) containing a nickel precursor and an iron precursor; immersing a nickel substrate in the first precursor solution; inducing a sol-gel reaction in the first precursor solution to form a first sol-gel coating layer on the nickel substrate; preparing a second precursor solution(sol) containing a nickel precursor and an iron precursor; immersing a nickel substrate in the second precursor solution; and inducing a sol-gel reaction in the second precursor solution to form a second sol-gel coating layer on the nickel substrate.

According to one embodiment, the nickel precursor may be a salt of nickel metal, which comprises at least one selected from the group consisting of a chlorine salt, a bromine salt, a sulfate salt, a nitrate salt, a carbonate salt, an acetate salt, a formic acid salt, an oxalic acid salt, and a citric acid salt.

According to one embodiment, the iron precursor may be a salt of iron metal, which comprises at least one selected from the group consisting of a chlorine salt, a bromine salt, a sulfate salt, a nitrate salt, a carbonate salt, an acetate salt, a formic acid salt, an oxalic acid salt, and a citric acid salt.

According to one embodiment, the method for preparing an electrode may further comprise stabilizing the formed first sol-gel coating layer, after forming the first sol-gel coating layer.

According to one embodiment, the stabilizing step may comprise at least one of the steps of: i) drying the electrode substrate on which the first sol-gel coating layer is formed, and ii) heat-treating the electrode substrate on which the first sol-gel coating layer is formed.

According to one embodiment, the method for preparing an electrode may further comprise stabilizing the formed second sol-gel coating layer, after forming the second sol-gel coating layer.

According to one embodiment, the stabilizing step may comprise at least one of the steps of: i) drying the electrode substrate on which the second sol-gel coating layer is formed, and ii) heat-treating the electrode substrate on which the second sol-gel coating layer is formed.

The terms "first," "second," etc. are used herein to explain various elements, and these terms are only used to distinguish one constitutional element from the other constitutional elements.

Also, technical terms used herein are provided to describe exemplary embodiments but are not intended to limit the present disclosure.

The singular forms include plural forms unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

And, in case it is stated that each layer or element is formed "on" or "above" each layers or elements, it means that each layer or element is formed right above each layer or element, or that other layers or elements may be additionally formed between the layers or on the object or substrate.

Although various modifications can be made to the present disclosure and the present disclosure may have various forms, specific examples will be illustrated and explained in detail below. However, it should be understood that these are not intended to limit the present disclosure to specific disclosure, and that the present disclosure includes all the modifications, equivalents or replacements thereof without departing from the spirit and technical scope of the present disclosure.

Below, the present disclosure will be described in detail.

According to one aspect of the present disclosure, there is provided an electrode comprising: a first sol-gel coating layer formed on at least one surface of the metal substrate; and a second sol-gel coating layer formed on the first sol-gel layer, wherein the first sol-gel coating layer and the second sol-gel coating layer each independently comprise nickel and iron.

In the present disclosure, the phrase "the electrode includes a metal such as nickel or iron" is used to indicate not only that the electrode includes a metal element itself, but also that the electrode includes ions of the metal element, or compounds thereof.

An electrode according to one embodiment of the present disclosure uses nickel and iron as active materials, and can be produced at a lower cost than an electrode using a precious metal such as platinum.

In addition, due to the multilayer structure including multiple sol-gel coating layers containing nickel and iron, it is possible to realize excellent electrochemical performance compared to a single-layer structure, and the coating layer has excellent durability, thereby ensuring high safety and stability.

The present inventors have found that in an electrode used in a water electrolysis method, particularly in an electrode used in an anion exchange membrane water electrolysis method, when a plurality of sol-gel coating layers containing a catalyst component are formed on a metal substrate, the electrode can achieve excellent electrochemical performance in a water electrolysis reaction, and also can provide an electrode having excellent durability of the coating layer, and completed the present disclosure.

In an electrode of one embodiment, the first and second sol-gel coating layers formed on at least one surface of the substrate each independently comprise nickel and iron, and the first and second sol-gel coating layers containing nickel and iron can function as catalysts mediating the generation of oxygen by water electrolysis. That is, the electrode according to one embodiment includes a catalyst layer having a multi-layered structure called the first and second sol-gel coating layers, and the catalyst layer having a multi-layered structure is the first and second sol-gel coating layers containing nickel and iron.

According to one embodiment, the metal substrate may include a porous metal foam. However, this is only one embodiment of a substrate form of an electrode that provides a large surface area for the reaction and allows rapid diffusion of reactants and products, and the present disclosure is not necessarily limited thereto.

For example, the metal foam may have a porosity of about 50 to about 200 PPI (pores per inch), or about 70 to about 170 PPI, or about 110 PPI.

In addition, the thickness of the nickel metal may be 150 to 350 *µ*m, specifically 200 to 300 *µ*m, for example 250 *µ*m.

According to one embodiment, the first sol-gel coating layer and the second sol-gel coating layer may each independently comprise nickel hydroxide and iron hydroxide.

According to one embodiment, the first sol-gel coating layer and the second sol-gel coating layer may each independently exist in a state in which nickel hydroxide and iron hydroxide form a three-dimensional gel network structure.

Here, the sol-gel layer containing nickel and iron can be completely distinguished in terms of its components or structure from a general metal plating layer in which nickel and iron metal atoms are directly deposited on a substrate, or a simple coating layer in which metal compounds containing nickel and iron elements are adsorbed or attached to a substrate, respectively.

The sol-gel coating layer is a layer formed by a sol-gel process, and may also be called a sol-gel film, a sol-gel membrane, or a sol-gel coating layer.

A simple metal compound coating layer other than a sol-gel coating layer may be formed by electrochemical methods such as electrolytic coating using a metal compound, physical deposition or coating methods. Such general compound coating layers are formed relatively thicker and rougher than sol-gel coating layers, and the degree of uniformity in its thickness and particle size is deteriorated.

However, the sol-gel coating layer formed by the sol-gel process using a metal precursor can have a uniform nanoscale structure and unique physical properties resulting therefrom. Specifically, when the sol-gel coating layer is formed using a nickel precursor and an iron precursor, the nickel precursor and iron precursor compounds are respectively converted into nickel compounds and iron compounds different from the original during the sol-gel process, and in this process, a solid network is formed between each compound, and a three-dimensional gel structure is formed. Such three-dimensional gel structures can include fine pores, and the structure and properties thereof can vary depending on after-treatment such as drying and heat treatment. Due to these properties, the sol-gel coating layer formed by the sol-gel process can provide a wider surface area for the water electrolysis reaction to the electrode, and can promote rapid diffusion of reactants and products, thereby improving the efficiency of the overall water electrolysis reaction.

Moreover, when the sol-gel coating layer is formed by the sol-gel process, it can be distinguished from a general metal plating layer or a metal compound coating layer in that in particular, it is possible to adjust the fine structure such as a three-dimensional gel structure or pores and the size of the structure.

And, the electrode according to one aspect of the present disclosure includes at least two layers of sol-gel coating layers containing nickel and iron, such as the first sol-gel coating layer and the second coating layer, so that the efficiency of the reaction and the durability of the electrode structure can be greatly improved.

The sol-gel coating layer having a multi-layered structure such as a double layer is a concept completely different from i) a single-structured sol-gel coating layer, or ii) a double-layer structure in which any two of the sol-gel coating layer, the metal plating layer, and the compound simple coating layer are selected, or iii) a compound having a layered double structure.

In particular, a compound having a layered double structure is a type of ionic solid, and is a two-dimensional multi-layered compound in which a metal cation layer, a hydroxide ion layer, and layers containing other anions and neutral molecules are repeated. In consideration of this, the compound having a layered double structure has simply a structure in which the compound itself simply has a double-layer shape, and is completely different from a structure in which the sol-gel coating layer of the three-dimensional gel structure mentioned in the present disclosure is formed in multiple layers. This is similar even in the case where the compound of the layered double structure is coated in multiple layers.

According to one embodiment, the first sol-gel coating layer and the second sol-gel coating layer may each independently comprise about 10 to about 25 moles, or about 10 moles or more, or about 15 moles or more, or about 16 moles or more, and about 25 moles or less, or about 20 moles or less, or about 18 moles or less of iron, relative to 100 moles of the nickel.

If the ratio of nickel is too high or the ratio of iron is too high outside the above range, the overvoltage phenomenon may increase, which may lead to the deterioration of the catalytic performance and lifetime.

According to one embodiment, the thickness of the first sol-gel coating layer may be about 100 to about 250 nm, or about 100 nm or more, or about 150 nm or more, and about 250 nm or less, or about 200 nm or less.

If the thickness of the first coating layer is too thin outside the above range, the advantage of the layered double structure may not be obtained, and if the thickness is too thick, the pores of the electrode may be blocked, thereby inhibiting material transfer.

According to one embodiment, the thickness of the second sol-gel coating layer may be about 500 to about 2000 nm, or about 500 nm or more, or about 800 nm or more, and about 2000 nm or less, or about 1000 nm or less.

If the thickness of the second coating layer is too thin outside the above range, the advantage of the layered double structure may not be obtained, and if the thickness is too thick, the pores of the electrode may be blocked, thereby inhibiting material transfer.

According to one embodiment, the thickness of the first sol-gel coating layer: the thickness of the second sol-gel coating layer may be about 1:2 to about 1:10, or about 1:5 to about 1:7, or about 1:5 to about 1:6.67.

The thickness of the first coating layer may vary depending on heat treatment or drying conditions in the process of forming the second coating layer, after forming the first coating layer. In this case, if the ratio between the first coating layer and the second coating layer is outside the above range, the advantage of the layered double structure may not be obtained.

On the other hand, according to another aspect of the present disclosure, there is provided a method for preparing an electrode, comprising the steps of: preparing a first precursor solution(sol) containing a nickel precursor and an iron precursor; immersing a nickel substrate in the first precursor solution; inducing a sol-gel reaction in the first precursor solution to form a first sol-gel coating layer on the nickel substrate; preparing a second precursor solution(sol) containing a nickel precursor and an iron precursor; immersing a nickel substrate in the second precursor solution; and inducing a sol-gel reaction in the second precursor solution to form a second sol-gel coating layer on the nickel substrate.

According to one embodiment, the nickel precursor may be a salt of nickel metal, which comprises at least one selected from the group consisting of a chlorine salt, a bromine salt, a sulfate salt, a nitrate salt, a carbonate salt, an acetate salt, a formic acid salt, an oxalic acid salt, and a citric acid salt. However, the present disclosure is not necessarily limited thereto, and this can be appropriately selected in consideration of the solvent to be used in the sol-gel process, the structure of the sol-gel coating layer to be finally formed, and the like.

According to one embodiment, the iron precursor may be a salt of iron metal, which comprises at least one selected from the group consisting of a chlorine salt, a bromine salt, a sulfate salt, a nitrate salt, a carbonate salt, an acetate salt, a formic acid salt, an oxalic acid salt, and a citric acid salt. However, the present disclosure is also not necessarily limited thereto, and this can be appropriately selected in consideration of the solvent to be used in the sol-gel process, the structure of the sol-gel coating layer to be finally formed, and the like.

A first precursor solution in a sol state containing the nickel precursor and iron precursor as described above is prepared. The solvent used in the solution is not particularly limited, but considering that the nickel precursor and the iron precursor form a gel in the form of a metal hydroxide in the sol-gel reaction process, it may be preferable to use a solvent having good compatibility with water among polar solvents other than water.

Specifically, such polar solvents can include, for example, at least one selected from the group consisting of methanol, ethanol, propanol, butanol, ethylene glycol, propylene glycol, dimethyl ether, diethyl ether, methyl ethyl ether, tetrahydrofuran, acetic acid, dimethylformamide, and nitromethane.

The concentration of nickel in the first precursor solution may be about 0.1 to about 10 M. And, the concentration of iron in the first precursor solution may be about 0.01 to about 1 M. However, the present disclosure is not necessarily limited thereto, and the amount of each chemical species may be appropriately varied to adjust the content of nickel and iron in the final product, the relative ratio of the two, or the three-dimensional network structure of the gel, the size of the fine pores, and the like.

At the time of preparing the first precursor solution, the method is not particularly limited. Specifically, the first precursor solution in a sol state can be prepared by adding an appropriate amount of the precursor materials to a solvent and stirring the mixture.

And, before immersing the nickel substrate in the first precursor solution, an acid treatment of immersing the nickel substrate in an acid can be performed. Through this acid treatment process, an oxide layer that may have been formed on the surface of the nickel substrate can be removed, and the surface roughness can be increased to form a thicker catalyst coating layer.

During the acid treatment, an acid substance such as hydrochloric acid, nitric acid, or sulfuric acid can be used, and it may be preferable to use an acid aqueous solution having a concentration of about 1 to about 20 wt.%.

The nickel substrate is immersed in the first precursor solution as described above to induce a sol-gel reaction. As mentioned above, in the sol-gel reaction, since nickel and iron mainly form a gel having a three-dimensional network structure in the form of a metal hydroxide, the sol-gel reaction can be induced by adding water to the above-mentioned solution and stirring the mixture.

However, this is also only one embodiment, and in order to adjust the structure or size of the gel, a gel having a three-dimensional network structure can be formed in the form of a compound other than a metal hydroxide, whereby the sol-gel reaction can be induced using solvents other than water, and water and other solvents can be appropriately mixed and used when added.

For example, when a precursor and a solvent meet to form a hydrate, an alkylene oxide compound or the like can play a role in taking away hydrogen ions from the hydrate and changing the precursor hydrate into the form of precursor hydroxide, and such precursor hydroxides can be bonded with each other through oxygen to form a gel structure.

According to one embodiment, the method for preparing an electrode may further comprise a step of stabilizing the first sol-gel coating layer formed after forming the first sol-gel coating layer.

According to one embodiment, the stabilizing step may comprise at least one of the steps of: i) drying the electrode substrate on which the first sol-gel coating layer is formed, and ii) heat-treating the electrode substrate on which the first sol-gel coating layer is formed.

The drying may be performed at a temperature of about 10°C to about 150°C for about 1 to 24 hours, and it may be advantageous to perform the drying under reduced pressure or vacuum conditions in terms of drying efficiency.

In addition, the temperature during the heat treatment may be preferably about 200°C to about 500°C.

The heat treatment may be distinguished from simple drying conditions in that it is a process for enhancing electrochemical characteristics while preventing side reactions under other conditions such as a specific temperature and an inert gas atmosphere.

By the heat treatment, an amorphous state can be created and a thick catalyst layer can be formed, which can greatly improve the performance of the catalyst. In addition, if the heat treatment temperature is further increased, a crystallized state can be created, thereby preventing the catalyst layer from falling off and greatly improving the long-term stability of the catalyst.

Subsequently, a second sol-gel coating layer is formed again on the substrate on which the first sol-gel coating layer is formed.

First, a second precursor solution containing a nickel precursor and an iron precursor is prepared.

Just like the first sol-gel coating layer and the second sol-gel coating layer are independent of each other, the second precursor solution can also be identical or different independently of the first precursor solution.

According to one embodiment, the nickel precursor may be a salt of nickel metal, which comprises a chlorine salt, a bromine salt, a sulfate salt, a nitrate salt, a carbonate salt, an acetate salt, a formic acid salt, an oxalic acid salt, a citric acid salt, and the like. However, the present disclosure is not necessarily limited thereto, and it can be appropriately selected in consideration of the solvent to be used in the sol-gel process, the structure of the sol-gel coating layer to be finally formed, and the like.

According to one embodiment, the iron precursor may be a salt of iron metal, which comprises a chlorine salt, a bromine salt, a sulfuric acid salt, a nitrate salt, a carbonate salt, an acetate salt, a formic acid salt, an oxalic acid salt, a citric acid salt, and the like. However, the present disclosure is also not necessarily limited thereto, and it can be appropriately selected in consideration of the solvent to be used in the sol-gel process, the structure of the sol-gel coating layer to be finally formed, and the like.

A second precursor solution in a sol state containing the nickel precursor and the iron precursor as described above is prepared. The solvent used in the solution is not particularly limited, but considering that the nickel precursor and the iron precursor form a gel in the form of a metal hydroxide in the sol-gel reaction process, it may be preferable to use a solvent having good compatibility with water among polar solvents other than water.

Specifically, such polar solvent may include, for example, at least one selected from the group consisting of methanol, ethanol, propanol, butanol, ethylene glycol, propylene glycol, dimethyl ether, diethyl ether, methyl ethyl ether, tetrahydrofuran, acetic acid, dimethylformamide, and nitromethane.

The concentration of nickel in the second precursor solution may be about 0.1 to about 10 M. And, the concentration of iron in the second precursor solution may be about 0.01 to about 1 M. However, the present disclosure is not necessarily limited thereto, and the amount of each chemical species may be appropriately varied to adjust the content of nickel and iron in the final product, the relative ratio of the two, or the three-dimensional network structure of the gel, the size of the fine pores, and the like.

At the time of preparing the second precursor solution, the method is not particularly limited. Specifically, the second precursor solution in a sol state can be prepared by adding an appropriate amount of the precursor material to a solvent and stirring the mixture.

A nickel substrate is immersed in the second precursor solution to induce a sol-gel reaction. As mentioned above, in the sol-gel reaction, nickel and iron mainly form a gel having a three-dimensional network structure in the form of a metal hydroxide, so the sol-gel reaction may be induced by adding water to the above-mentioned solution and stirring the mixture.

However, this is also only one exemplary embodiment, and in order to adjust the structure or size of the gel, a gel having a three-dimensional network structure may be formed in the form of a compound other than a metal hydroxide, whereby a sol-gel reaction may be induced using solvents other than water, and water and other solvents may be appropriately mixed and used when added.

According to one embodiment, the method for preparing an electrode may further comprise a step of stabilizing the formed second sol-gel coating layer, after forming the second sol-gel coating layer.

According to one embodiment, the stabilizing step may include at least one of the steps of: i) drying the electrode substrate on which the second sol-gel coating layer is formed, and ii) heat-treating the electrode substrate on which the second sol-gel coating layer is formed.

The drying may be performed at a temperature of about 10°C to about 150°C for about 1 to 24 hours, and it may be advantageous to perform the drying under reduced pressure or vacuum conditions in terms of drying efficiency.

And, during heat treatment, the temperature may be preferably about 200 °C to about 500 °C.

### [Advantageous Effects]

According to one embodiment of the present disclosure. an electrode for anion exchange membrane water electrolysis that can achieve improved electrochemical performance and also has excellent durability can be provided.

### [BRIEF DESCRIPTION OF THE DRAWINGS]

FIGS. 1 to 4 are FIB-SEM images of cross sections of the electrodes prepared according to an embodiment of the present disclosure.
FIGS. 5 and 6 are graphs showing performance evaluation results of the electrodes prepared according to an embodiment of the present disclosure.

### [DETAILED DESCRIPTION OF THE EMBODIMENTS]

Hereinafter, the action and effect of the invention will be described in more detail by way of specific examples. However, these examples are presented for illustrative purposes only, and the scope of the invention is not defined by them.

### <EXAMPLE>

### Comparative Example 1: Single layer

10 ml of ethanol was added to a flask, and 10.5 mmol of NiCl₂·6H₂O and 1.75 mmol of FeCl₃ were added thereto, and the mixture was stirred at 750 rpm for 2 hours using a cooling ball. (Preparation of the first precursor solution)

10 ml of ethanol and 9 ml of deionized water were added to a separate vial.

Separately, a 15 wt.% hydrochloric acid solution was prepared in a flask, and a nickel foam gas diffusion layer (manufacturer: Alantum foam; product name: PN-04) was immersed in the solution, and acid treatment was performed for 15 minutes.

The acid-treated nickel foam GDL was taken out of the flask, rinsed once with deionized water, and then placed in the first precursor solution, and simultaneously, ethanol and deionized water contained in the vial were also added to the first precursor solution.

5 ml of propylene oxide was added dropwise to the mixed solution for about 1 minute while stirring at 200 rpm. After the dropwise addition was completed, the mixture was stirred at 200 rpm for 24 hours.

After 24 hours have passed, the nickel foam GDL was taken out, and soaked in an acetone solution for about 5 days to remove foreign substances.

After the washing with acetone was completed, it was placed in a vacuum oven, and dried at about 100°C for about 10 hours.

The electrode on which the coating layer was formed was placed in an oven under an argon atmosphere, purged at about 30°C for 30 minutes, and then heated to about 200°C under temperature-rising conditions of 5°C/min, and heat-treated while maintaining it at that temperature for 1 hour.

### Example 1: Dry_200

### Formation of the first sol-gel coating layer

10 ml of ethanol was added to a flask, and 10.5 mmol of NiCl₂·6H₂O and 1.75 mmol of FeCl₃ were added thereto, and the mixture was stirred at 750 rpm for 2 hours using a cooling ball. (Preparation of the first precursor solution)

10 ml of ethanol and 9 ml of deionized water were added to a separate vial.

Separately, a 15 wt.% hydrochloric acid solution was prepared in a flask, and a nickel foam gas diffusion layer (manufacturer: Alantum foam; product name: PN-04) was immersed in the solution, and acid treatment was performed for 15 minutes.

The acid-treated nickel foam GDL was taken out of the flask, rinsed once with deionized water, and then placed in the first precursor solution, and simultaneously, the ethanol and deionized water contained in the vial were also added to the first precursor solution.

5 ml of propylene oxide was added dropwise to the mixed solution for about 1 minute while stirring at 200 rpm. After the dropwise addition was completed, the mixture was stirred at 200 rpm for 24 hours.

After 24 hours have passed, the nickel foam GDL was taken out, and soaked in an acetone solution for about 5 days to remove foreign substances.

After the washing with acetone was completed, it was placed in a vacuum oven, and dried at about 100°C for about 10 hours.

### Formation of the second sol-gel coating layer

10 ml of ethanol was added to a flask, and 10.5 mmol of NiCl₂·6H₂O and 1.75 mmol of FeCl₃ were added thereto, and the mixture was stirred at 750 rpm for 2 hours using a cooling ball. (Preparation of the second precursor solution)

10 ml of ethanol and 9 ml of deionized water were added to a separate vial.

The nickel foam GDL on which the first sol-gel coating layer had been formed was added to the first precursor solution, and simultaneously, ethanol and deionized water contained in the vial were also added to the first precursor solution.

5 ml of propylene oxide was added dropwise to the mixed solution for about 1 minute while stirring at 200 rpm. After the dropwise addition was completed, the mixture was stirred at 200 rpm for 24 hours.

After 24 hours have passed, the nickel foam GDL was taken out, and soaked in an acetone solution for about 5 days to remove foreign substances.

After the washing with acetone was completed, it was placed in a vacuum oven, and dried at about 100°C for about 10 hours.

### Heat treatment

The electrode on which the second sol-gel coating layer had been formed was placed in an oven under an argon atmosphere, purged at about 30°C for 30 minutes, then heated to about 200°C under temperature-rising conditions of 5°C/min, and heat treatment was performed while maintaining at that temperature for 1 hour.

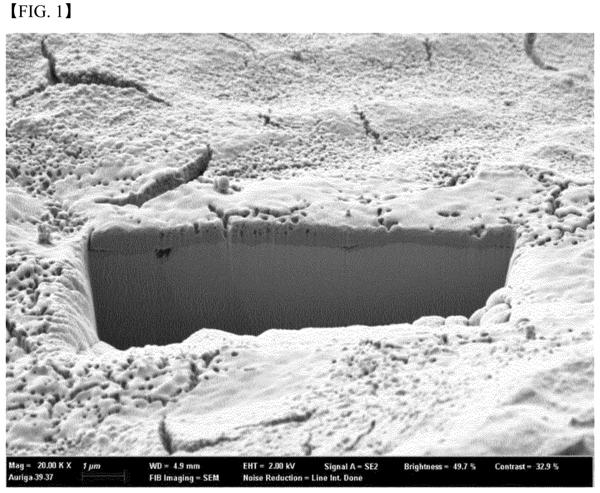

The image in which the cross section of the electrode prepared in the Example was observed using FIB-SEM was shown in FIG. 1.

### Example 2: Dry_400

### Formation of the first sol-gel coating layer

10 ml of ethanol was added to a flask, and 10.5 mmol of NiCl₂·6H₂O and 1.75 mmol of FeCl₃ were added thereto, and the mixture was stirred at 750 rpm for 2 hours using a cooling ball. (Preparation of the first precursor solution)

10 ml of ethanol and 9 ml of deionized water were added to a separate vial.

Separately, a 15 wt.% hydrochloric acid solution was prepared in a flask, and a nickel foam gas diffusion layer (manufacturer: Alantum foam; product name: PN-04) was immersed in the solution, and acid treatment was performed for 15 minutes.

The acid-treated nickel foam GDL was taken out of the flask, rinsed once with deionized water, and then placed in the first precursor solution, and simultaneously, ethanol and deionized water contained in the vial were also added to the first precursor solution.

5 ml of propylene oxide was added dropwise to the mixed solution for about 1 minute while stirring at 200 rpm. After the dropwise addition was completed, the mixture was stirred at 200 rpm for 24 hours.

After 24 hours have passed, the nickel foam GDL was taken out, and soaked in an acetone solution for about 5 days to remove foreign substances.

After the washing with acetone was completed, it was placed in a vacuum oven, and dried at about 100°C for about 10 hours.

### Formation of the second sol-gel coating layer

10 ml of ethanol was added to a flask, and 10.5 mmol of NiCl₂·6H₂O and 1.75 mmol of FeCl₃ were added thereto, and the mixture was stirred at 750 rpm for 2 hours using a cooling ball. (Preparation of the second precursor solution)

10 ml of ethanol and 9 ml of deionized water were added to a separate vial.

The nickel foam GDL on which the first sol-gel coating layer had been formed was added to the first precursor solution, and simultaneously, ethanol and deionized water contained in the vial were also added to the first precursor solution.

5 ml of propylene oxide was added dropwise to the mixed solution for about 1 minute while stirring at 200 rpm. After the dropwise addition was completed, the mixture was stirred at 200 rpm for 24 hours.

After 24 hours have passed, the nickel foam GDL was taken out, and soaked in an acetone solution for about 5 days to remove foreign substances.

After the washing with acetone was completed, it was placed in a vacuum oven, and dried at about 100°C for about 10 hours.

### Heat treatment

The electrode on which the second sol-gel coating layer had been formed was placed in an oven under an argon atmosphere, purged at about 30°C for 30 minutes, then heated to about 400°C under temperature-rising conditions of 5°C/min, and heat treatment was performed while maintaining at that temperature for 1 hour.

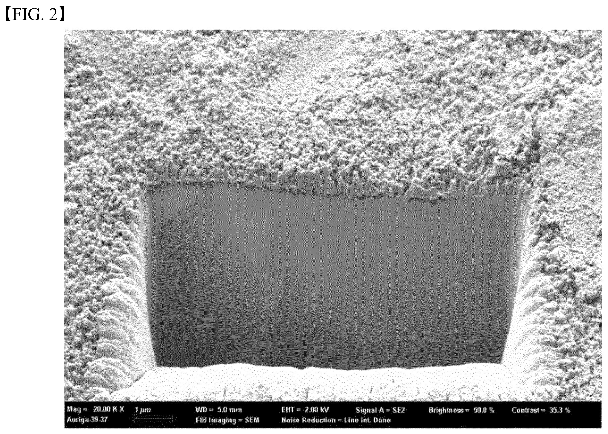

The image in which the cross section of the electrode prepared in the Example was observed using FIB-SEM was shown in FIG. 2.

### Example 3: 200_200

### Formation of the first sol-gel coating layer

10 ml of ethanol was added to a flask, and 10.5 mmol of NiCl₂·6H₂O and 1.75 mmol of FeCl₃ were added thereto, and the mixture was stirred at 750 rpm for 2 hours using a cooling ball. (Preparation of the first precursor solution)

10 ml of ethanol and 9 ml of deionized water were added to a separate vial.

Separately, a 15 wt.% hydrochloric acid solution was prepared in a flask, and a nickel foam gas diffusion layer (manufacturer: Alantum foam; product name: PN-04) was immersed in the solution, and acid treatment was performed for 15 minutes.

The acid-treated nickel foam GDL was taken out of the flask, rinsed once with deionized water, and then placed in the first precursor solution, and simultaneously, ethanol and deionized water contained in the vial were also added to the first precursor solution.

5 ml of propylene oxide was added dropwise to the mixed solution for about 1 minute while stirring at 200 rpm. After the dropwise addition was completed, the mixture was stirred at 200 rpm for 24 hours.

After 24 hours have passed, the nickel foam GDL was taken out, and soaked in an acetone solution for about 5 days to remove foreign substances.

After the washing with acetone was completed, it was placed in a vacuum oven, and dried at about 100°C for about 10 hours.

### Heat treatment

The electrode on which the second sol-gel coating layer had been formed was placed in an oven under an argon atmosphere, purged at about 30°C for 30 minutes, then heated to about 200°C under temperature-rising conditions of 5°C/min, and heat treatment was performed while maintaining at that temperature for 1 hour.

### Formation of the second sol-gel coating layer

10 ml of ethanol was added to a flask, and 10.5 mmol of NiCl₂·6H₂O and 1.75 mmol of FeCl₃ were added thereto, and the mixture was stirred at 750 rpm for 2 hours using a cooling ball. (Preparation of the second precursor solution)

10 ml of ethanol and 9 ml of deionized water were added to a separate vial.

The nickel foam GDL on which the first sol-gel coating layer had been formed was added to the first precursor solution, and simultaneously, ethanol and deionized water contained in the vial were also added to the first precursor solution.

5 ml of propylene oxide was added dropwise to the mixed solution for about 1 minute while stirring at 200 rpm. After the dropwise addition was completed, the mixture was stirred at 200 rpm for 24 hours.

After 24 hours have passed, the nickel foam GDL was taken out, and soaked in an acetone solution for about 5 days to remove foreign substances.

After the washing with acetone was completed, it was placed in a vacuum oven, and dried at about 100°C for about 10 hours.

### Heat treatment

The electrode on which the second sol-gel coating layer had been formed was placed in an oven under an argon atmosphere, purged at about 30°C for 30 minutes, then heated to about 200°C under temperature-rising conditions of 5°C/min, and heat treatment was performed while maintaining at that temperature for 1 hour.

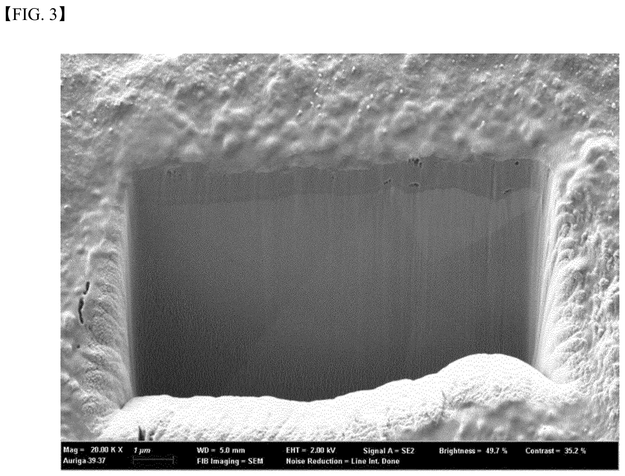

The image in which the cross section of the electrode prepared in the Example was observed using FIB-SEM was shown in FIG. 3.

### Example 4: 400_400

### Formation of the first sol-gel coating layer

10 ml of ethanol was added to a flask, and 10.5 mmol of NiCl₂·6H₂O and 1.75 mmol of FeCl₃ were added thereto, and the mixture was stirred at 750 rpm for 2 hours using a cooling ball. (Preparation of the first precursor solution)

10 ml of ethanol and 9 ml of deionized water were added to a separate vial.

Separately, a 15 wt.% hydrochloric acid solution was prepared in a flask, and a nickel foam gas diffusion layer (manufacturer: Alantum foam; product name: PN-04) was immersed in the solution, and acid treatment was performed for 15 minutes.

The acid-treated nickel foam GDL was taken out of the flask, rinsed once with deionized water, and then placed in the first precursor solution, and simultaneously, ethanol and deionized water contained in the vial were also added to the first precursor solution.

5 ml of propylene oxide was added dropwise to the mixed solution for about 1 minute while stirring at 200 rpm. After the dropwise addition was completed, the mixture was stirred at 200 rpm for 24 hours.

After 24 hours have passed, the nickel foam GDL was taken out, and soaked in an acetone solution for about 5 days to remove foreign substances.

After the washing with acetone was completed, it was placed in a vacuum oven, and dried at about 100°C for about 10 hours.

### Heat treatment

The electrode on which the second sol-gel coating layer had been formed was placed in an oven under an argon atmosphere, purged at about 30°C for 30 minutes, then heated to about 400°C under temperature-rising conditions of 5°C/min, and heat treatment was performed while maintaining at that temperature for 1 hour.

### Formation of the second sol-gel coating layer

10 ml of ethanol was added to a flask, and 10.5 mmol of NiCl₂·6H₂O and 1.75 mmol of FeCl₃ were added thereto, and the mixture was stirred at 750 rpm for 2 hours using a cooling ball. (Preparation of the second precursor solution)

10 ml of ethanol and 9 ml of deionized water were added to a separate vial.

The nickel foam GDL on which the first sol-gel coating layer had been formed was added to the first precursor solution, and simultaneously, ethanol and deionized water contained in the vial were also added to the first precursor solution.

5 ml of propylene oxide was added dropwise to the mixed solution for about 1 minute while stirring at 200 rpm. After the dropwise addition was completed, the mixture was stirred at 200 rpm for 24 hours.

After 24 hours have passed, the nickel foam GDL was taken out, and soaked in an acetone solution for about 5 days to remove foreign substances.

After the washing with acetone was completed, it was placed in a vacuum oven, and dried at about 100°C for about 10 hours.

### Heat treatment

The electrode on which the second sol-gel coating layer had been formed was placed in an oven under an argon atmosphere, purged at about 30°C for 30 minutes, then heated to about 400°C under temperature-rising conditions of 5°C/min, and heat treatment was performed while maintaining at that temperature for 1 hour.

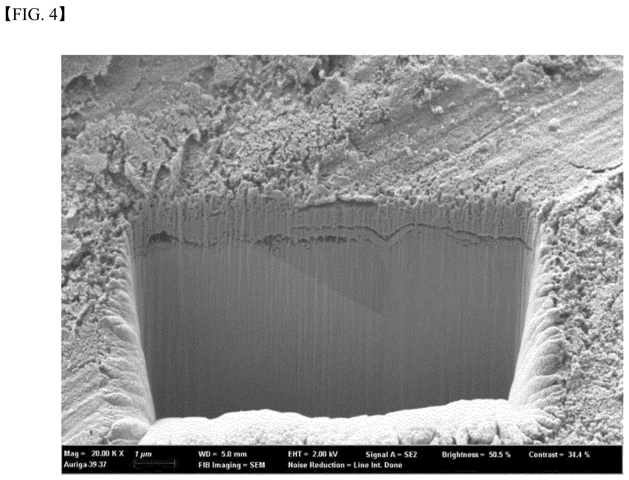

The image in which the cross section of the electrode prepared in the Example was observed using FIB-SEM was shown in FIG. 4.

### Electrode Evaluation

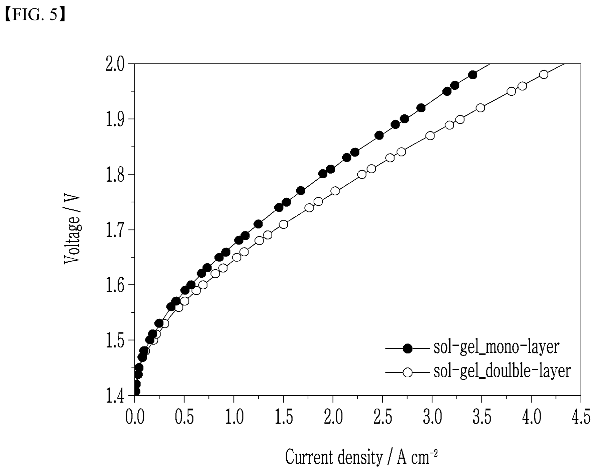

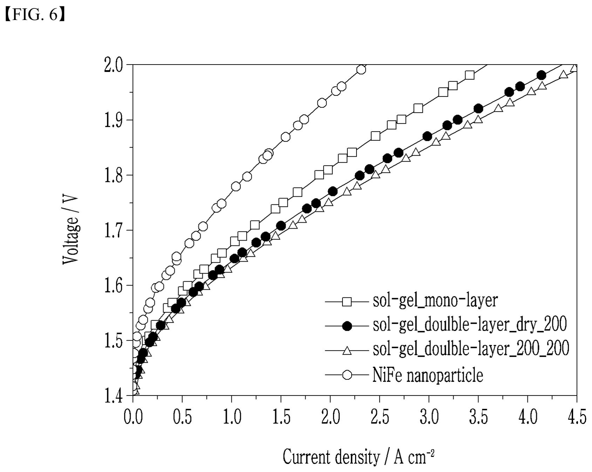

For the electrodes prepared in Examples and Comparative Examples, the current (current density) was measured while changing the voltage, and the results are shown in FIGS. 5 and 6.

FIG. 5 shows the results of evaluating the electrode prepared in Example 1. Referring to FIG. 5, it can be clearly confirmed that the performance increases by about 20% or more at a voltage of 1.9 V compared to Comparative Examples in which a single coating was formed.

FIG. 6 shows the results of evaluating the electrodes prepared in Examples 1 and 3. Referring to FIG. 6, it can be clearly confirmed that the electrical performance of the electrode according to one embodiment of the present disclosure is very excellent.

## Claims

1. An electrode comprising:
a metal substrate containing nickel;
a first sol-gel coating layer formed on at least one surface of the metal substrate; and
a second sol-gel coating layer formed on the first sol-gel layer,
wherein the first sol-gel coating layer and the second sol-gel coating layer each independently comprise nickel and iron.

2. The electrode of claim 1, wherein:
the metal substrate comprises a porous metal foam.

3. The electrode of claim 1, wherein:
the first sol-gel coating layer and the second sol-gel coating layer each independently comprise nickel hydroxide and iron hydroxide.

4. The electrode of claim 1, wherein:
the first sol-gel coating layer and the second sol-gel coating layer each independently exist in a state in which nickel hydroxide and iron hydroxide form a three-dimensional gel network structure.

5. The electrode of claim 1, wherein:
the first sol-gel coating layer and the second sol-gel coating layer each independently comprise 10 to 25 moles of iron relative to 100 moles of the nickel.

6. The electrode of claim 1, wherein:
the first sol-gel coating layer has a thickness of 100 to 200 nm.

7. The electrode of claim 1, wherein:
the second sol-gel coating layer has a thickness of 500 to 2000 nm.

8. The electrode of claim 1, wherein:
the thickness of the first sol-gel coating layer: the thickness of the second sol-gel coating layer is 1:2 to 1:10.

9. The electrode of claim 1,
which is used for anion exchange membrane water electrolysis.

10. A method for preparing an electrode, comprising the steps of:
preparing a first precursor solution(sol) containing a nickel precursor and an iron precursor;
immersing a nickel substrate in the first precursor solution;
inducing a sol-gel reaction in the first precursor solution to form a first sol-gel coating layer on the nickel substrate;
preparing a second precursor solution(sol) containing a nickel precursor and an iron precursor;
immersing a nickel substrate in the second precursor solution; and
inducing a sol-gel reaction in the second precursor solution to form a second sol-gel coating layer on the nickel substrate.

11. The method for preparing an electrode of claim 10, wherein:
the nickel precursor is a salt of nickel metal, which comprises at least one selected from the group consisting of a chlorine salt, a bromine salt, a sulfate salt, a nitrate salt, a carbonate salt, an acetate salt, a formic acid salt, an oxalic acid salt, and a citric acid salt.

12. The method for preparing an electrode of claim 10, wherein:
the iron precursor is a salt of iron metal, which comprises at least one selected from the group consisting of a chlorine salt, a bromine salt, a sulfate salt, a nitrate salt, a carbonate salt, an acetate salt, a formic acid salt, an oxalic acid salt, and a citric acid salt.

13. The method for preparing an electrode of claim 10,
further comprising stabilizing the formed first sol-gel coating layer, after forming the first sol-gel coating layer.

14. The method for preparing an electrode of claim 13, wherein:
the stabilizing comprises at least one of the steps of: i) drying the electrode substrate on which the first sol-gel coating layer is formed, and ii) heat-treating the electrode substrate on which the first sol-gel coating layer is formed.

15. The method for preparing an electrode of claim 10,
further comprising stabilizing the formed second sol-gel coating layer, after forming the second sol-gel coating layer.

16. The method for preparing an electrode of claim 15, wherein:
the stabilizing comprises at least one of the steps of: i) drying the electrode substrate on which the second sol-gel coating layer is formed, and ii) heat-treating the electrode substrate on which the second sol-gel coating layer is formed.
